(19) Europäisches Patentamt

European Patent Office

Office européen des brevets

(11) Publication number: **0 493 842 A2**

# EUROPEAN PATENT APPLICATION

(21) Application number: **91122421.0**

(22) Date of filing: **31.12.91**

(51) Int. Cl.⁵: **C09D 101/18**

(30) Priority: **04.01.91 US 637492**

(43) Date of publication of application:
**08.07.92 Bulletin 92/28**

(84) Designated Contracting States:
**AT BE CH DE DK ES FR GB IT LI NL SE**

(71) Applicant: **AQUALON COMPANY**
**2711 Centerville Road Little Falls Centre One**
**Wilmington Delaware 19850-5417(US)**

(72) Inventor: **Winchester, Charles Mirack**
**133 Chesterville Road**
**Landenberg, Pennsylvania 19350(US)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) Waterborne nitrocellulose lacquer emulsion.

(57) A waterborne nitrocellulose lacquer emulsion with a VOC (g/l) of 450 or lower is produced in a reactor equipped with a an impeller by inversion of a water-in-oil emulsion to an oil-in-water emulsion. On a total weight basis for solids and liquids the final emulsion contains up to 50% nitrocellulose up to 25% isopropylacetate% up to 75% water% up to 10% dibutylphthalate% up to 30% coconut alkyd and up to 10% anionic surfactant.

EP 0 493 842 A2

This invention relates to nitrocellulose coating compositions. In particular, the invention relates to an improved waterborne nitrocellulose lacquer emulsion useful as a finish for wood furniture.

Lacquer emulsions containing from 9.5 to 25.0 percent by weight nitrocellulose in varying mixtures of butyl alcohol, amyl acetate, methyl amyl acetate, xylene, naphta, octyl acetate and methyl isobutyl ketone were described in the 1953 edition of Lacquer Emulsions. Formulation and Use - Hercules Powder Company. A more recent Hercules Incorporated publication - Development Data, October 24, 1980 for Antique Commode Finish System illustrates the preparation of a nitrocellulose lacquer emulsion wherein Volatile Organic Compounds (VOC) can be reduced to 2.85 lbs./1000 sq. ft. compared to 6.73 for a conventional lacquer. Other information on the PREPARATION PROCEDURES FOR NITROCELLULOSE WATERBORNE COATINGS AND INKS is contained in Hercules Technical Information CSL-225A.

A particularly pertinent reference is U.S. Patent 4,814,015, WATERBORNE NITROCELLULOSE COMPOSITIONS, assigned to the Prillaman Chemical Corporation. This reference discloses a rewettable nitrocellulose composition comprising: 7.5 to 35% wet nitrocellulose, 7.5 to 30% solvent for nitrocellulose, 1.5 to 20% plasticizer, 25 to 75% water and 25 to 35% anionic ammonium-containing surfactant. Further distinctions of this prior art from the present invention are contained in comparative Example 2 hereinafter.

Other references concerning nitrocellulose and nitrocellulose coating compositions are U.S. 3,325,315; U.S. 3,953,386; U.S. 4,011,388; U.S. 4,590,019 and DE 38 38 646 A1.

Despite a continuing need for an improved waterborne nitrocellulose lacquer emulsion with lower Volatile Organic Compound (VOC), it was not until the present invention that this need was satisfied without sacrifice of the wood finishing properties of the nitrocellulose lacquer emulsion.

It is an object of the invention to provide an improved nitrocellulose lacquer emulsion having a weight percent composition based on total weight of solids and liquids of 10 to 50% nitrocellulose, 0 to 10% plasticizer, 0 to 30% resin modifier, 0 to 25% organic solvent, 40 to 70% water and 2 to 10% anionic surfactant.

It is Preferred that the nitrocellulose have a nitrogen content of 10.9 to 12.2% by weight, the organic solvent be 2-ethylhexyl acetate, the plasticizer be tributoxyethyl phosphate and the resin modifier be a coconut alkyd.

It is preferred that the waterborne nitrocellulose lacquer emulsion have a Volatile Organic Compound (VOC) of 3.5 lbs/gallon or less. It is especially preferred that the VOC be below 2.5.

It is a further object to provide a process for the production of this improved waterborne nitrocellulose lacquer emulsion comprising the steps.

(1) mixing organic solvent, resin modifier, plasticizer and surfactant to prepare a premix solution;

(2) adding sufficient caustic to obtain a final pH for the nitrocellulose lacquer of from 4 to 7 after the addition of the nitrocellulose to the premix;

(3) adding water wet nitrocellulose while stirring the premix solution and continue mixing until the nitrocellulose is dissolved to prepare a high viscosity nitrocellulose lacquer;

(4) adding sufficient water to invert the emulsion from a water-in-oil to a oil-in-water emulsion; and

(5) filtering to finish a waterborne nitrocellulose lacquer emulsion.

In this process it is preferred that a disperser with a disc impeller be used in step (3) and that the water wet nitrocellulose have a nitrogen content of 10.0 to 12.2% and a viscosity grade between 10-15 cps and 5 to 6 seconds.

It was previously known to use an inversion process to produce waterborne nitrocellulose lacquer emulsions. However, these previously known waterborne nitrocellulose lacquer emulsions failed to meet all the environmental and practical requirements of furniture manufacturers. It was this existing need to be able to employ lower VOC compositions which could meet the practical demands of wood finishing which provided the driving force for the advance in the state of the art provided by the present invention.

It was an unexpected result to find that the rigorous demands of the furniture manufacturers and environmental regulations alike could be met without sacrifice of quality for the wood finish provided in comparison to the compositions of the prior art. What was even more surprising was that the means of achieving the beneficial results of the present invention had been available to prior art investigators who tried and failed to achieve equivalent results.

Nitrocellulose suitable for the practice of the invention is available in a variety of grades from Aqualon, a Hercules Incorporated Company. A preferred grade of nitrocellulose is referred to as Aqualon emulsion grade nitrocellulose. Other suppliers of nitrocellulose from outside the United States are Wolff Walsrode AG, Imperial Chemical Incorporated (ICI) and Asahi Chemical. Those nitrocellulose products having a nitrogen content of from 10.9 to 12.2% and viscosity grade between 10-15 cps and 5 to 6 seconds are preferred.

Suitable organic solvents may be 2-ethylhexyl acetate, isopropyl acetate, butyl acetate, amyl acetate, hexyl acetate, C8 alkyl acetate and butoxy ethoxy ester of acetic acid (ethylene glycol butyl ether acetate).

A preferred organic solvent is 2-ethylhexyl acetate.

While dibutyl phthalate and tributoxyethyl phosphate are preferred plasticizers, it is envisioned that other plasticizers or combinations of plasticizers can be employed, provided overall compatibility is achieved and that performance of the lacquer emulsion and the final lacquer are not degraded.

The function of the surfactant is to provide satisfactory performance both before and after inversion. A mixture of anionic and nonionic surfactants can be used for this purpose. While other anionic surfactants may be equal satisfactory for this purpose, a preferred anionic surfactant is a phosphate which is the ethoxylated nonylphenol ester of partially esterified phosphoric acid or the ethoxylated $C_{13}$ alkyl ester of partially esterified phosphoric acid. Suitable surfactants are available from Rhone-Poulenc as GAFAC® RE-610 and RS-710.

```
        Monoester              R-[CH2 CH2 0]X - 0    0
                                                      P
                                             MO    OM
        Diester                R-[CH2 CH2 0]X - 0    0
                                                      P
                               R-[CH2 CH2 0]X - 0    OM
    where M = H or Na
        R = GAFAC® RE-610   Cg+        0         -0
            GAFAC® 710      C13
        X = 10 - 15
```

It is essential for the process that these surfactants be at least partially neutralized with caustic such as sodium hydroxide (NaOH). It is also essential that a surfactant or surfactant mixture having properties similar to GAFAC® RE-610 and 710 be employed in the process of the invention.

Resin modifiers are short oil alkyds which are commercially available from Reichold Chemical and C. J. Osborne, etc. A preferred type of resin modifier is a coconut alkyd available from Reichold Chemical as AroplazR EA-6101. Also quite suitable as a resin modifier is a maleic modified rosin ester available from Hercules Incorporated as Pentrex® 28.

Equipment suitable for the mixing and inversion required for the invention is available from Hockmeyer Equipment Corporation and Morehouse Industries Inc. Suitable mixing and inversion can also be done in a Pfaudler Reactor equipped with a 4 bladed turbine and impeller and "h" shaped stationary baffle.

A preferred lacquer emulsion procedure for the practice of the invention employs a Pfaudler reactor equipped with impeller and baffle. Steps of the procedure are:

(1) the reactor is charged with organic solvent, resin modifier, plasticizer and surfactant with the mixer at low speed;

(2) the charge is thoroughly mixed for about five minutes at low speed;

(3) a sodium hydroxide solution is added in an amount sufficient to give a pH of 4 to 7 after final mixing of the later added nitrocellulose;

(4) mixing of the sodium hydroxide continues for about 10 minutes at low speed;

(5) the water wet nitrocellulose is added slowly and agitation is increased as necessary to suspend the nitrocellulose;

(6) after closing the reactor, the agitation is increased to a maximum;

(7) mixing continues at maximum agitation and with jacket cooling until the nitrocellulose is dissolved;

(8) inversion water is added slowly to avoid flooding wherein a water-in-oil emulsion is converted to an oil-in-water emulsion; and

(9) the emulsion is cooled and filtered to finish the waterborne nitrocellulose lacquer emulsion.

Optionally after the production of the latex it is possible to perform a stripping step to remove solvent to further lower VOC. In this regard, it is important to note that isopropyl acetate forms an azeotrope with water such that both solvent and water will be removed in a stripping step.

The following examples illustrate the practice of the invention which has industrial applicability for wood furniture finishes.

EXAMPLE 1

Waterborne nitrocellulose lacquer emulsions were prepared to compare the performance and properties of previously known techniques (control) to those of the invention (experimental). The following comparative ingredients were weighed and measured Prior to beginning the preparation.

| Ingredient | Control | Primary |
|---|---|---|
| Amyl Acetate | 28.9 | - |
| Isopropyl Acetate | - | 13.7 |
| Exxate® 800, a C8 alkyl acetate available from Exxon Chemicals | - | 9.3 |
| Santicizer 141 a plasticizer available from Monsanto Industrial Chemicals | 4.6 | - |
| Dibutyl Phthalate | - | 7.7 |
| GAFAC® RE-610, a phosphate ester of ethoxylated nonylphenol | 4.1 | - |
| GAFAC® 710, a phosphate ester of ethoxylated C-C aliphatic hydrocarbon | 3.4 | - |
| NaOH (20% Aqueous) | 1.2 | 1.3 |
| Water to adjust ratio | - | 1.4 |
| Emulsion Grade Nitrocellulose, 18-25 cps, water wet, 65% solids (Aqualon) | 28.5 | - |
| Emulsion Grade Nitrocellulose, 1/2 sec., water wet, 79% solids (Aqualon) | - | 29.3 |
| Water to invert | 32.6 | 33.9 |
| Antifoam (optional) | 0.1 | - |
| Total parts by weight | 100.0 | 100.0 |
| NC/Plasticizer/Surfactant (weight ratios) | 67.5/16.5/15 | 67.5/22.5/10 |

The control was Prepared in a 1200 ml jacketed stainless steel beaker using a high-speed agitator equipped with a 1.5 30 inch disc type impeller. As the nitrocellulose dissolved, the material became a thick, doughy paste which had to be frequently scraped from the side of the vessel in order to keep the impeller from cavitating. There was uncontrolled solvent loss.

The experiment was made in a Hockmeyer HHL-II-LAB dual-shaft mixer with a 1.5 gallon working capacity. One shaft was equipped with a 2-inch disc impeller capable of operating up to 8200 rpm driven by a 1.5 hp motor. The second shaft had an anchor type blade equipped with polytetrafluoroethylene scrapers for the walls and flat bottom of the vessel. This assembly was driven by a 3/4 hp motor and was capable of speeds up to 360 rpm. The reactor was closed after the nitrocellulose was added to proven solvent loss.

For both the control and the experiments, all ingredients except for nitrocellulose, NaOH, water and antifoam were charged to the reactor equipped with a disc impeller. After low speed mixing for 5 minutes the sodium hydroxide solution was added and mixing continued for about more minutes. Water to adjust the ratio was added to the experiment. Then water wet nitrocellulose was added over a period of from 10 to 15 minutes as agitation was gradually increased to maintain suspension of the nitrocellulose and to maintain a vortex as the mix thickened. Cooling water was circulated in the reactor jacket to dissipate heat of solution and the agitator increased to maximum. Approximately 60 to 90 minutes was required to dissolve the nitrocellulose. Slow addition of water to invert along with high speed mixing effected the inversion from water-in-oil to oil-in-water in about 15 to 20 minutes. For the experiment, the water to adjust the water/surfactant ratio was added along with the sodium hydroxide solution.

Comparative values for the waterborne nitrocellulose lacquer emulsions showing VOC reduction are contained in Table 1.

Table 1

| Property or Test | Control | Experiment |
|---|---|---|
| Solids, weight % in lacquer phase | 47.0 | 60.0 |
| VOC, g/l | 550.0 | 450.0 |
| Particle Size (microns) | 0.2 | 0.16 |
| VOC lbs/1000 sq. ft. | 4.6 | 3.8 |

Samples of both the control and experiment were used as wood finishes and showed comparable film properties except the experiment had a lower tendency to form a white spot when exposed to water droplets, due to the lower surfactant level.

From the results it can be seen that the improved VOC provided by the invention is obtained without sacrifice of wood finishing properties.

COMPARATIVE EXAMPLE 2

A waterborne nitrocellulose emulsion is prepared according to U.S. 4,814,015 and the properties are compared with the experimental emulsion of Example 1. It is observed that while the emulsion of U.S. 4,814,015 has a VOC of 3.0 it is intended for rotogravure application to a flexible substrate such as paper with the unique advantage of rewettability of the gravure cylinder.

EXAMPLE 3

Waterborne nitrocellulose lacquer emulsions were prepared to compare the performance and properties of previously known technique (control) to those of the invention (experimental). The following comparative ingredients were weighed and measured prior to beginning the preparation.

|  | Parts By Weight | |
| --- | --- | --- |
|  | Control | Experiment |
| Ethylene glycol butyl ether acetate | 33.33 | - |
| Amyl acetate, primary | 8.30 | - |
| 2-ethylhexyl acetate | - | 8.20 |
| Isopropyl acetate | - | 4.60 |
| Tributoxyethyl phosphate | - | 3.25 |
| Aroplaz 2575 (solids) a short-oil coconut alkyd available from Reichhold Chemicals | 12.22 | - |
| Aroplaz EA-1601 same solids thinned to 70% non volatiles in a mixture of isopropyl acetate 74% 2-ethylhexyl acetate 13% and Xylene 13%) available from Reichhold Chemicals | - | 16.30 |
| GAFAC® RE-610 (as in Example 1) | 3.33 | - |
| GAFAC® 710 (as in Example 1) | - | 3.25 |
| NaOH (20% Aqueous) | 1.62 | 1.60 |
| Water to Adjust Ratio | - | 2.90 |
| Emulsion Grade Nitrocellulose, 1/2 sec. water wet (Aqualon) | 15.28 | 18.60 |
| Water to Invert | 25.92 | 41.30 |
| Total | 100.00 | 100.00 |

6

The control and experiment were prepared as described in Example 1.

Comparative values for the waterborne nitrocellulose lacquer emulsions and their use for furniture finishing are contained in Table 2.

```
                               Table 2

           Parts By Weight                  Control    Experiment

   Solids, Weight % in Lacquer Phase          40.0       65.

   Solids, Weight % in Emulsion               16.0       32.0

   VOC, g/L                                   600.0      400.0

   VOC, lbs./gal.                               5.0        3.3

   Cold Check Resistance per           Fail 1 cycle   Pass 20 cycles

      ASTM D-1211
```

EXAMPLE 4

The procedure of Example 1 was repeated to prepare a waterborne nitrocellulose lacquer emulsion except that larger scale equipment was used. A Pfaulder reactor with a 50 gallon capacity was employed. The vessel was equipped with a low-shear, four-blade turbine with a maximum speed of 250 rpm driven by a 2 HP motor. The vessel contained a "h" shaped stationary baffle and one arm of the baffle contained a thermowell. An adiabatic temperature rise was observed during nitrocellulose dissolutions. A completely satisfactory waterborne nitrocellulose lacquer emulsion was obtained in comparison to the Hockmeyer HHL-11-Lab dual shaft mixer with 2 inch disc impeller driven by a 1% H.P. motor with variable speed up to 8200 rpm.

EXAMPLE 5

Using the equipment of Examples 1 and 4 it was possible to determine after numerous experiments that a minimum of 4.5% by weight surfactant in the lacquer phase was required to reduce particle size below 0.2 micron. Above 7% by weight surfactant in the lacquer phase the material became softer and more water sensitive.

## Claims

1. A waterborne nitrocellulose lacquer emulsion; characterized in that the nitrocellulose lacquer emulsion comprises on a total weight basis a nitrocellulose lacquer solids content of from 10% to 50%, 0 to 25% organic solvent such as isopropylacetate, 40 to 75% water, 0 to 10% plasticizer such as dibutyl phthalate, 0 to 30% resin modifier such as a coconut alkyd and 2 to 10% anionic surfactant, wherein the nitrocellulose lacquer emulsions has a VOC (g/l) of 450 or lower.

2. The emulsion of claim 1 where the nitrocellulose has a nitrogen content of from 10.9 to 12.2% and a viscosity grade between 10-15 cps and 5 to 6 seconds.

3. The emulsion of claim 2 where the anionic surfactant is one or more of a phosphate ester of ethoxylated nonylphenol and a phosphate ester of ethoxylated C10-C15 aliphatic hydrocarbon.

4. The emulsion of claim 3 where the resin modifier is a coconut alkyd and the plasticizer is tributoxyethyl phosphate.

5. The emulsion of claim 4 where the organic solvent is 2-ethylhexyl acetate.

6. The emulsion of claim 5 where the nitrocellulose/plasticizer/surfactant ratio is 67.5/22.5/10.

7. The emulsion of claim 1 with a VOC of 300 or lower.

8. A process for preparing a waterborne nitrocellulose lacquer emulsion involves the steps:
(1) mixing organic solvent, resin modifier, plasticizer and surfactant to prepare a premix solution;
(2) adding sufficient caustic to obtain a final pH for the nitrocellulose lacquer of from 4 to 7 after the addition of the nitrocellulose to the premix;
(3) adding water wet nitrocellulose while stirring the premix solution until the nitrocellulose is dissolved to prepare a high viscosity nitrocellulose lacquer;
(4) adding sufficient water to convert the emulsion from a water-in-oil to and oil-in-water emulsion; and
(5) filtering to finish a waterborne nitrocellulose lacquer emulsion.

9. The process of claim 8 where steps (1) to (4) occur in a Pfaudler reactor.

10. The process of claim 9 where step (3) is performed with an impeller mixer.

11. The process of claim 10 where cooling occurs between step (4) and (5).

12. The process of claim 11 where the water wet nitrocellulose has a nitrogen content of 10.9 to 12.2 and a viscosity grade between 10-15 cps and 5 to 6 seconds.

13. The process of claim 8 where steps (1) to (4) occur 5 in a dual shaft mixer with disc impeller and anchor agitator.